# EUROPÄISCHE PATENTANMELDUNG

(11) **EP 1 628 192 A2**
(43) Veröffentlichungstag der Anmeldung: **22.02.2006**
(21) Anmeldenummer: 05016737.8
(22) Anmeldetag: 02.08.2005
(51) Int. Cl.: G06F 1/18

(54) **Schaltung für an einen Datenbus anschliessbare Module**

(30) Priorität: 20.08.2004 DE 102004040324
(71) Anmelder: HONEYWELL B.V., 1101 EA Amsterdam Z.O. (NL)
(72) Erfinder: Vegter, Derk, 7833 BH Nieuw Amsterdam (NL)
(74) Vertreter: Sturm, Christoph

(57) **Zusammenfassung**

Die Erfindung betrifft eine Schaltung für an einen Datenbus anschließbare Module, nämlich zur bedarfsgerechten Bereitstellung von Strom, mit zwei Stromquellen, wobei eine erste Stromquelle (19) eine zweite Stromquelle (20) derart ansteuert, dass die zweite Stromquelle (20) nur dann Strom an einem Ausgang bereitstellt und so in Datenbus eingespeist, wenn ein Bedarf am Datenbus anliegt.

## Beschreibung

Die Erfindung betrifft eine Schaltung für ein an einen Datenbus anschließbares Modul.

Aus der Gebäudeautomatisierungstechnik ist es bereits bekannt, mehrere Module eines Gebäudeautomatisierungssystems an einen Datenbus bzw. Kommunikationsbus anzuschließen. Bei den an einen Datenbus eines Gebäudeautomatisierungssystems anzuschließenden Modulen handelt es sich zum Beispiel um Thermostate, Gasbrenner bzw. Boiler oder auch Wandmodule bzw. Bedienmodule. Bei den an einen Datenbus anzuschließenden Modulen kann zwischen Modulen mit eigener Spannungsversorgung und ohne eigene Spannungsversorgung unterschieden werden. Die an einen Datenbus angeschlossenen Module mit Spannungsversorgung stellen nach dem Stand der Technik permanent einen entsprechenden Strom bereit, und zwar unabhängig davon, ob der Strom zum Senden oder Empfangen von Daten benötigt wird oder nicht. Nach dem Stand der Technik stellen die an einen Datenbus angeschlossenen Module mit eigener Spannungsversorgung demnach auch dann an Ausgängen des Moduls einen entsprechenden Strom bereit und speisen diesen in den Datenbus ein, wenn von dem jeweiligen Modul weder Daten zu empfangen noch Daten zu senden sind. Hierdurch stellt sich ein erheblicher Spannungsverlust ein.

Hiervon ausgehend liegt der vorliegenden Erfindung das Problem zu Grunde, eine neuartige Schaltung für ein an einen Datenbus anschließbares Modul zu schaffen, mit welcher Spannungsverlust minimierbar sind.

Dieses Problem wird durch eine Schaltung mit den Merkmalen des Anspruchs 1 gelöst. Erfindungsgemäß umfasst die Schaltung zwei Stromquellen, nämlich eine erste Stromquelle und eine von der ersten Stromquelle ansteuerbare zweite Stromquelle, wobei die erste Stromquelle zwei Eingänge und einen Ausgang aufweist, wobei der Ausgang der ersten Stromquelle mit einem steuerbaren Eingang der zweiten Stromquelle verschaltet ist, wobei die erste Stromquelle abhängig von einem an dem Datenbus und damit an den Kontakten des Moduls und damit an den beiden Eingängen der ersten Stromquelle anliegenden Spannungspotential an dem Ausgang der ersten Stromquelle und damit am Eingang der zweiten Stromquelle einen Steuerstrom bereitstellt, und wobei die zweite Stromquelle abhängig von diesem Steuerstrom an einem Ausgang der zweiten Stromquelle und damit am Kontakt des Moduls bedarfsgerecht Strom bereitstellt und in Datenbus einspeist.

Mit der erfindungsgemäßen Schaltung für ein an einen Datenbus anschließbares Modul stellen dieselben nur dann einen Strom bereit, wenn auch ein Bedarf vorliegt, wenn also entweder von den Modulen Daten zu empfangen bzw. Daten zu senden sind. Liegt kein Bedarf am Datenbus an, so wird auch kein Strom bereitgestellt und es stellt sich kein Spannungsverlust ein.

Nach einer bevorzugten Weiterbildung der Erfindung wiest die erste Stromquelle zumindest zwei Transistoren, zwei Widerstände und eine vorzugsweise als Zenerdiode ausgebildete Diode auf, wobei die beiden Widerstande in Reihe geschaltet und einer derselben an den Emitter eines ersten Transistors angeschlossen ist, und wobei die Diode und ein zweiter Transistor derart parallel zu der Reihenschaltung aus den beiden Widerständen und dem ersten Transistor geschaltet sind, dass die Diode mit einer Kathode derselben an die Basis des ersten Transistors und mit einer Anode derselben an die Basis des zweiten Transistors angeschlossen ist, wobei der Emitter des zweiten Transistors zusammen mit einem der Widerstände an ein Massepotential angeschlossen ist. Die Kathode der als Zenerdiode ausgebildeten Diode bildet einen ersten Eingang der erste Stromquelle, ein zweiter Eingang ist zwischen den beiden in Reihe geschalten Widerständen ausbildet. Der Kollektor des ersten Transistors bildet den Ausgang der ersten Stromquelle.

Nach einer weiteren bevorzugten Weiterbildung der Erfindung wiest die zweite Stromquelle zumindest einen Transistor und zwei Widerstände auf, wobei ein erster Widerstand derart mit dem Transistor in Reihe schaltet ist, dass der erste Widerstand an den Emitter des Transistors angeschlossen ist, und wobei ein zweiter Widerstand derart mit dem Transistor und dem ersten Widerstand parallel geschaltet ist, dass der zweite Widerstand an die Basis des Transistors angeschlossen ist. Die Basis des Transistors der zweiten Stromquelle bildet den steuerbaren Eingang derselben, der mit dem Ausgang der ersten Stromquelle verschaltet ist. Der Kollektor des Transistors der zweiten Stromquelle bildet den Ausgang derselben.

Bevorzugte Weiterbildungen der Erfindung ergeben sich aus den Unteransprüchen und der nachfolgenden Beschreibung. Nachfolgend wird ein Ausführungsbeispiel der Erfindung, ohne hierauf beschränkt zu sein, anhand der Zeichnung näher erläutert. In der Zeichnung zeigt:
- Fig. 1:: ein Schaltbild einer erfindungsgemäßen Schaltung für an einen Datenbus anschließbare Module; und
- Fig. 2: ein Diagramm zur Verdeutlichung der Funktionsweise der erfindungsgemäßen Schaltung.

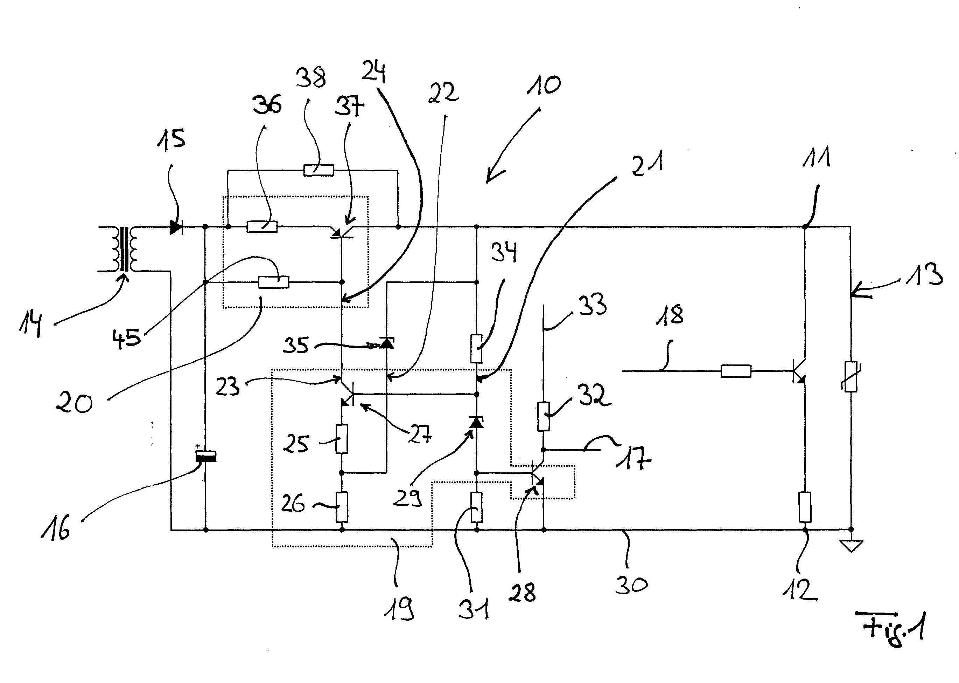

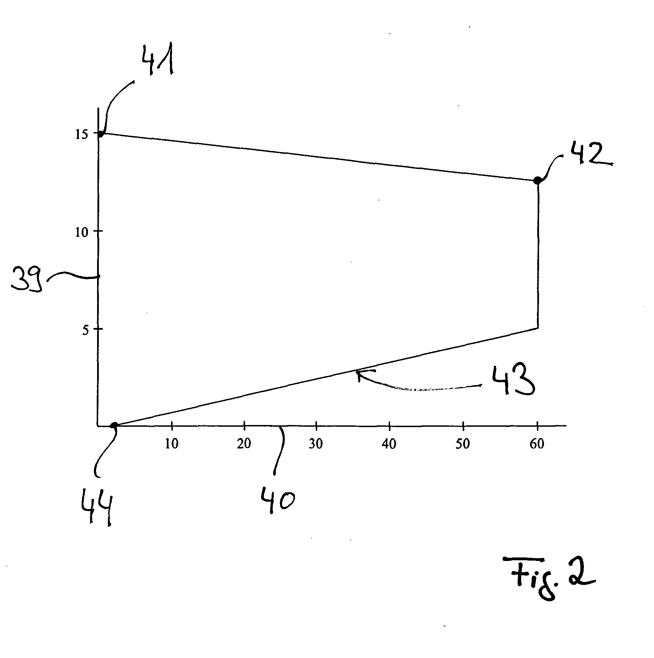

Nachfolgend wird die hier vorliegende Erfindung unter Bezugnahme auf Fig. 1 und 2 in größerem Detail beschrieben.

Fig. 1 zeigt ein Schaltbild einer erfindungsgemäßen Schaltung 10 für an einen Datenbus anschließbare Module, insbesondere für an einen Datenbus eines Gebäudeautomatisierungssystems anschließbare Module, wie zum Beispiel ein Wandmodul. Die Schaltung 10 ist in ein derartiges Modul integriert und mit Kontakten 11, 12 an einen Datenbus 13 angeschlossen. Wie Fig. 1 entnommen werden kann, ist in das Modul neben der erfindungsgemäßen Schaltung 10 weiterhin eine Spannungsversorgung integriert, wobei die Spannungsversorgung von einem Transformator 14, einer Diode 15 sowie einem Kondensator 16 gebildet wird. Das Modul 10 dient dem Empfangen sowie Übertragen von Daten, wobei ein Anschluss 17 dem Empfangen von Daten und ein Anschluss 18 dem Senden von Daten dient. Die hier vorliegende Erfindung betrifft nicht die Details der Datenübertragung, sondern vielmehr die Details der Schaltung 10 zur bedarfsgerechten Bereitstellung eines Stroms, weshalb nachfolgend lediglich auf die erfindungsgemäße Schaltung 10 im Detail eingegangen wird.

Die erfindungsgemäße Schaltung 10 umfasst zwei Stromquellen, nämlich eine erste Stromquelle 19 sowie eine von der ersten Stromquelle 19 steuerbare, zweite Stromquelle 20. Die Baugruppen, die zu der ersten Stromquelle 19 sowie zur zweiten Stromquelle 20 gehören, sind im Schaltbild der Fig. 1 durch punktierte Kästen umrahmt. Die erste Stromquelle 19 verfügt über zwei Eingänge 21, 22 sowie einen Ausgang 23, wobei der Ausgang 23 der ersten Stromquelle 19 an einen steuerbaren Eingang 24 der zweiten Stromquelle 20 angeschlossen ist.

Wie Fig. 1 entnommen werden kann, umfasst im gezeigten Ausführungsbeispiel die erste Stromquelle 19 zwei Widerstände 25, 26, zwei Transistoren 27, 28 sowie eine als Zenerdiode 29 ausgebildete Diode. Die beiden Widerstände 25 und 26 sind in Reihe geschaltet, wobei der Widerstand 25 an den Emitter des als NPN-Transitor ausgebildeten Transistors 27 angeschlossen ist. Die als Zenerdiode 29 ausgebildete Diode ist mit ihrer Kathode an die Basis des Transistors 27 angeschlossen und mit ihrer Anode an die Basis des zweiten Transistors 28. Der Emitter des als NPN-Transitor ausgebildeten, zweiten Transistors 28 ist an ein Massepotential 30 angeschlossen, wobei parallel zur Basis-Emitter-Diode des zweiten Transistors 28 ein weiterer Widerstand 31 geschaltet ist. Der Kollektor des zweiten Transistors 28 ist über einen Widerstand 32 an ein Spannungspotential 33 angeschlossen.

Wie Fig. 1 entnommen werden kann, bildet der Kollektor des ersten Transistors 27 den Ausgang 23 der ersten Stromquelle 19. Die an die Basis des ersten Transistors 27 angeschlossene Kathode der Zenerdiode 29 bildet den ersten Eingang 21 der ersten Stromquelle 19, der zweite Eingang 22 ist zwischen den beiden in Reihe geschalteten Widerständen 25 und 26 ausgebildet. Wie Fig. 1 entnommen werden kann, ist am ersten Eingang 21 die Kathode der Zenerdiode 29 mit einem Widerstand 34 verschaltet, der zweite Eingang 22 der ersten Stromquelle 19 ist mit einer als Zenerdiode 35 ausgebildeten Diode verschaltet, nämlich mit der Anode derselben. Die Kathode der Zenerdiode 35 ist an das am Kontakt 11 anliegende Potential angeschlossen.

Die zweite, von der ersten Stromquelle gesteuerte zweite Stromquelle 20 verfügt über zwei Widerstände 36, 45 sowie einen Transistor 37. Ein erster Widerstand 36 ist mit dem Emitter des als PNP-Transistor ausgebildeten Transistors 37 verschaltet, ein zweiter Widerstand 45 ist derart parallel zum ersten Widerstand 36 und dem Transistor 37 geschaltet, dass der zweite Widerstand 45 mit der Basis des Transistors 37 verschaltet ist. Die Basis des Transistors 37 bildet den steuerbaren Eingang 24 der zweiten Stromquelle 20. Zu der Reihenschaltung aus dem Widerstand 36 und dem Transistor 37 ist, wie Fig. 1 entnommen werden kann, ein weiterer Widerstand 38 parallel geschaltet, wobei dieser Widerstand 38 an den Emitter des Transistors 37 angeschlossen ist. Der Emitter des Transistors 37 bildet den Ausgang der zweiten, steuerbaren Stromquelle 20 und stellt bedarfsgerecht einen Strom am Datenbus 13 bzw. am Kontakt 11 bereit.

Unter Bezugnahme auf das Diagramm der Fig. 2 wird nachfolgend die Funktionsweise der erfindungsgemäßen Schaltung beschrieben, wobei in diesem Zusammenhang exemplarisch davon ausgegangen werden soll, dass am Datenbus 13 und demnach an den Kontakten 11 und 12 eine Spannung zwischen 0V und 15 V anliegt, dass am Spannungspotential 33 eine Spannung von 5V anliegt, dass die Zenerspannung der Zenerdiode 29 5,1V und die Zenerspannung der Zenerdiode 35 10V beträgt, und dass die Widerstände 25, 26 und 34 5,1 kΩ, die Widerstände 32 und 38 10kΩ, der Widerstand 45 22kΩ und der Widerstand 36 160Ω betragen. Auf der vertikal verlaufenden Achse 39 ist das am Datenbus bzw. an den Kontakten 11 und 12 anliegende Spannungspotential in V aufgetragen, auf der horizontal verlaufenden Achse 40 der von der erfindungsgemäßen Schaltung 10 bereitgestellte Ausgangsstrom in mA.

Aus dem Diagramm der Fig. 2 folgt, dass dann, wenn am Datenbus und demnach an den Kontakten 11 und 12 ein Spannungspotential von 15V anliegt, unter den oben angegebenen Dimensionierungen die Basisspannung des Transistors 27 5,7V beträgt, die sich aus der Zenerspannung der Zenerdiode 29 und der Basis-Emitter-Spannung des Transistors 28 zusammensetzt. Am Emitter des Transistors 27 liegt dann eine Spannung von 5,1V an, die Spannung an der Anode der Zenerdiode 35 beträgt dann 5V, nämlich die Differenz zwischen dem Spannungspotential von 15V und der Zenerspannung der Zenerdiode 35. In diesem Fall liegt dann am Widerstand 25 nahezu keine Spannung an, sodass die erste Stromquelle 19 am Ausgang 23 und demnach am Eingang 24 der zweiten Stromquelle 20 keinen Strom bereitstellt, sodass am Kontakt 11 lediglich einige wenige mA über den Widerstand 38 bereitgestellt werden. Dies entspricht dem Punkt 41 im Diagramm der Fig. 2.

Liegt an den Kontakten 11 und 12 und demnach am Datenbus ein Spannungspotential von 12,5V an, so beträgt die Basisspannung des Transistors 27 wiederum 5,7V, was der Summe der Zenerspannung der Zenerdiode 29 und der Basis-Emitter-Spannung des Transistors 28 entspricht. Die Emitterspannung des Transistors 27 beträgt wiederum 5,1V, die Spannung an der Anode der Zenerdiode 35 beträgt hingegen 2,5V, was der Differenz zwischen dem Spannungspotential der Kontakte 11, 12 und der Zenerspannung der Zenerdiode 35 entspricht. In diesem Fall liegen dann am Widerstand 25 eine Spannung von in etwa 2,5V an, sodass am Ausgang 23 der ersten Stromquelle 19 ein Steuerstrom für die zweite Stromquelle 20 bereitgestellt wird. Auf Basis dieses am Eingang 24 der zweiten Stromquelle 20 bereitgestellten Steuerstroms, gibt dieselbe ihren maximalen Ausgangsstrom von 60mA aus. Dies entspricht dem Punkt 42 im Diagramm der Fig. 2.

Für Spannungspotentiale an den Kontakten 11 und 12, die zwischen 12,5V und 5,7V liegen, wird im gezeigten Ausführungsbeispiel der maximale Ausgangsstrom von 60mA bereitgestellt. Für diese Spannungspotentiale kann auf die obigen Ausführungen verwiesen werden.

Wird jedoch das Spannungspotential an den Kontakten 11 und 12 auf einen Wert von weniger als 5,7V verringert, was dem Abschnitt 43 in Fig. 2 entspricht, so beträgt die Emitterspannung des Transistors 27 weniger als 5,1V und die Spannung an der Anode der Zenerdiode 35 beträgt weniger als 2,5V, da in diesem Fall kein Strom durch die Zenerdiode fließt. Am Widerstand 25 liegt dann ein Spannungspotential von weniger als 2,5V an, sodass die erste Stromquelle 19 einen geringeren Steuerstrom bereitstellt. Demzufolge wird von der zweiten Stromquelle 20 ein Ausgangsstrom von weniger als 60mA bereitgestellt.

Wird das an den Kontakten 11 und 12 anliegende Spannungspotential auf einen Wert von in etwa 0V verringert, so stellt die erste Stromquelle 19 wiederum keinen Ausgangsstrom und demnach keinen Steuerstrom für die zweite Stromquelle 20 bereit, sodass von der zweiten Stromquelle 20 dann wiederum kein Ausgangsstrom bereitgestellt wird und lediglich über den Widerstand 38 einige wenige mA am Kontakt 11 bereitgestellt werden. Dies entspricht dem Punkt 44 im Diagramm der Fig. 2.

Mit der erfindungsgemäßen Schaltung können Verluste minimiert werden, da ein Ausgangsstrom bedarfsgerecht bereitgestellt wird. Liegt am Datenbus bzw. an den Kontakten 11 und 12 kein Strombedarf an, so beträgt im gezeigten Ausführungsbeispiel die Busspannung beispielweise 15V, und es wird kein Strom am Kontakt 11 bereitgestellt. Abhängig von der am Datenbus anliegenden Spannung wird ein Ausgangstrom bereitgestellt, wobei der bereitgestellte Ausgangsstrom im gezeigten Ausführungsbeispiel zwischen 12,5V und 5,7V 100% des Maximalbetrags beträgt und zwischen 15V und 12,5V sowie zwischen 5,7V und 0V zwischen 0% und 100% beträgt. In dem Fall, in welchem die zweite Stromquelle keinerlei Ausgangsstrom bereitstellt, wird über den Widerstand 38 ein Ausgangsstrom von in etwa 2% des Maximalbetrags von 60 mA bereitgestellt.

### Bezugszeichenliste

- 10: Schaltung
- 11: Kontakt
- 12: Kontakt
- 13: Datenbus
- 14: Transformator
- 15: Diode
- 16: Kondensator
- 17: Anschluss
- 18: Anschluss
- 19: erste Stromquelle
- 20: zweite Stromquelle
- 21: Eingang
- 22: Eingang
- 23: Ausgang
- 24: Eingang
- 25: Widerstand
- 26: Widerstand
- 27: Transistor
- 28: Transistor
- 29: Zenerdiode
- 30: Massepotential
- 31: Widerstand
- 32: Widerstand
- 33: Potential
- 34: Widerstand
- 35: Zenerdiode
- 36: Widerstand
- 37: Transistor
- 38: Widerstand
- 39: Achse
- 40: Achse
- 41: Punkt
- 42: Punkt
- 43: Bereich
- 44: Punkt
- 45: Widerstand

## Patentansprüche

1. Schaltung für ein an einen Datenbus (13) anschließbares Modul, welches eine eigene, integrierte Spannungsversorgung aufweist, zur bedarfsgerechten Bereitstellung von Strom an Kontakten (11, 12) des Moduls, mit welchen dasselbe an den Datenbus (13) anschließbar ist, und damit zur bedarfsgerechten Einspeisung von Strom in den Datenbus (13), wobei die Schaltung (10) zwei Stromquellen aufweist, nämlich eine erste Stromquelle (19) und eine von der ersten Stromquelle (19) ansteuerbare zweite Stromquelle (20), wobei die erste Stromquelle (19) zwei Eingänge (21, 22) und einen Ausgang (23) aufweist, wobei der Ausgang (23) der ersten Stromquelle (19) mit einem steuerbaren Eingang (24) der zweiten Stromquelle (20) verschaltet ist, wobei die erste Stromquelle (19) abhängig von einem an dem Datenbus (13) und damit an den Kontakten (11, 12) des Moduls und damit an den beiden Eingängen (21, 22) der ersten Stromquelle (19) anliegenden Spannungspotential an dem Ausgang (23) der ersten Stromquelle (19) und damit am Eingang (24) der zweiten Stromquelle (20) einen Steuerstrom bereitstellt, und wobei die zweite Stromquelle (20) abhängig von diesem Steuerstrom an einem Ausgang der zweiten Stromquelle (20) und damit am Kontakt (11) des Moduls bedarfsgerecht Strom bereitstellt und in Datenbus (13) einspeist.

2. Schaltung nach Anspruch 1, **dadurch gekennzeichnet, dass** die erste Stromquelle (19) zumindest zwei Transistoren (27, 28), zwei Widerstände (25, 26) und eine vorzugsweise als Zenerdiode (29) ausgebildete Diode umfasst, wobei die beiden Widerstande (25, 26) in Reihe geschaltet und einer derselben an den Emitter eines ersten Transistors (27) angeschlossen ist, und wobei die Diode und ein zweiter Transistor (28) derart parallel zu der Reihenschaltung aus den beiden Widerständen (25, 26) und dem ersten Transistor (27) geschaltet sind, dass die Diode (29) mit einer Kathode derselben an die Basis des ersten Transistors (27) und mit einer Anode derselben an die Basis des zweiten Transistors (28) angeschlossen ist, wobei der Emitter des zweiten Transistors (28) zusammen mit einem der Widerstände (26) an ein Massepotential (30) angeschlossen ist.

3. Schaltung nach Anspruch 2, **dadurch gekennzeichnet, dass** die Kathode der als Zenerdiode (29) ausgebildeten Diode einen ersten Eingang (21) der erste Stromquelle (19) bildet, wobei die Kathode der Zenerdiode (29) mit einem weiteren Widerstand (34) verschaltet ist.

4. Schaltung nach Anspruch 2 oder 3, **dadurch gekennzeichnet, dass** zwischen den beiden in Reihe geschalten Widerständen (25, 26) ein zweiter Eingang (22) der erste Stromquelle (19) ausbildet ist, wobei der zweite Eingang (22) mit einer Anode einer weiteren, vorzugsweise als Zenerdiode (35) ausgebildete Diode verschaltet ist.

5. Schaltung nach einem oder mehreren der Ansprüche 2 bis 4, **dadurch gekennzeichnet, dass** der Kollektor des ersten Transistors (27) den Ausgang (23) der ersten Stromquelle (19) bildet, der mit dem steuerbaren Eingang (24) der zweiten Stromquelle (20) verschaltet ist.

6. Schaltung nach einem oder mehreren der Ansprüche 1 bis 5, **dadurch gekennzeichnet, dass** die zweite Stromquelle (20) zumindest einen Transistor (37) und zwei Widerstände (36, 45) aufweist, wobei ein erster Widerstand (36) derart mit dem Transistor (37) in Reihe geschaltet ist, dass der erste Widerstand (36) an den Emitter des Transistors (37) angeschlossen ist, und wobei ein zweiter Widerstand (45) derart mit dem Transistor (37) und dem ersten Widerstand (36) parallel geschaltet ist, dass der zweite Widerstand (36) an die Basis des Transistors (37) angeschlossen ist.

7. Schaltung nach Anspruch 6, **dadurch gekennzeichnet, dass** die Basis des Transistors (37) der zweiten Stromquelle (20) den steuerbaren Eingang (24) derselben bildet und mit dem Kollektor des ersten Transistors (27) der ersten Stromquelle (19) verschaltet ist.

8. Schaltung nach Anspruch 6 oder 7, **dadurch gekennzeichnet, dass** sich ein weiterer Widerstand (38) derart mit dem Transistor (37) und dem ersten Widerstand (36) der zweiten Stromquelle (20) parallel geschaltet ist, dass dieser Widerstand (38) an den Emitter des Transistors (37) angeschlossen ist.
